(19)
Europäisches Patentamt
European Patent Office
Office européen des brevets

(11) Veröffentlichungsnummer : **0 417 430 B1**

(12) **EUROPÄISCHE PATENTSCHRIFT**

(45) Veröffentlichungstag der Patentschrift : **09.09.92 Patentblatt 92/37**

(51) Int. Cl.$^5$ : **A01M 17/00,** A01F 25/16

(21) Anmeldenummer : **90113675.4**

(22) Anmeldetag : **17.07.90**

(54) **Verfahren und Einrichtung zum Entwesen von organischem Schüttgut.**

(30) Priorität : **12.09.89 DE 3930470**

(43) Veröffentlichungstag der Anmeldung : **20.03.91 Patentblatt 91/12**

(45) Bekanntmachung des Hinweises auf die Patenterteilung : **09.09.92 Patentblatt 92/37**

(84) Benannte Vertragsstaaten : **AT BE CH DK ES FR GB GR IT LI LU NL SE**

(56) Entgegenhaltungen :
**EP-A- 0 320 012**
**DE-A- 2 602 034**
**DE-A- 3 445 990**

(73) Patentinhaber : **KOHLENSÄURE-WERKE RUD. BUSE GMBH & CO.**
**Sprudelstrasse**
**W-5462 Bad Hönningen (DE)**

(72) Erfinder : **Corinth, Hans-Gerd, Dipl.-Ing.**
**Ringstrasse 63**
**W-5462 Bad Hönningen (DE)**
Erfinder : **Reichmuth, Christoph, Dr. Dipl.-Ing.**
**Clayallee 307**
**W-1000 Berlin 37 (DE)**

(74) Vertreter : **Münzhuber, Robert, Dipl.-Phys. et al**
**Patentanwalt Rumfordstrasse 10**
**W-8000 München 5 (DE)**

EP 0 417 430 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Verfahren und eine Einrichtung zum Entwesen von organischem Schüttgut, beispielsweise Getreide, in einem druckfesten Behälter mittels Kohlendioxidgas.

Es ist gemäß dem ersten Teil des Anspruchs 1 und der DE-A-2602034 bekannt daß organisches Schüttgut, wie etwa Getreide, Reis, Mais und dergleichen, mittels Kohlendioxid entwest werden kann, wobei die erforderliche Einwirkzeit dadurch auf vertretbare Zeitspannen, etwa wenige Stunden, herabgesetzt werden kann, daß man die Entwesung in einem druckfesten Behälter vornimmt und das Kohlendioxidgas unter einen vergleichsweise hohen Druck setzt. Dabei sind z.B aus der DE-A-3445990 Behandlungen mit reinem $CO_2$ bei Drücken von 1 bis 100 bar und Zeiten von 2 bis 240 Minuten bekannt. Der Vorteil dieser Entwesung mit Kohlendioxidgas besteht darin, das Kohlendioxid - im Vergleich mit den sonstigen Giftstoffe darstellenden Entwesungsmitteln - für Mensch und Produkt ungefährlich und umweltfreundlich ist. Nachteilig ist jedoch, daß der Verbrauch an Kohlendioxidgas hoch ist, was die Anwendbarkeit des Verfahrens, insbesondere wenn große Mengen an Schüttgut entwest werden sollen, aus wirtschaftlichen Gründen einschränkt. Bekannte Einrichtungen zur Durchführung des Kohlendioxidgas-Entwesungsverfahrens bestehen gemäß der DE-A-26 02 034 und damit auch gemäß des ersten Teils des Anspruchs 3 aus einem aufreshtstehenden, druckfesten Behälter in Form eines langgestrecken Zylinders und einer damit verbindbaren Kohlendioxidgas-Quelle. Diese bekannten Einrichtungen sind besonders dann unwirtschaftlich, wenn große Schüttgutmengen in kurzen Zeiten entwest werden müssen, etwa in ein Schiff zu verlandendes Getreide.

Aufgabe der vorliegenden Erfindung ist es deshalb, das Kohlendioxidgas-Verfahren und die zu dessen Durchführung benötigten Einrichtungen so zu verbessern, daß das Verfahren mit einer verringerten Menge an Kohlendioxid auskommt und die Einrichtungen die Entwesung auch großer Schüttgutmengen in vergleichsweise kurzer Zeit und auf wirtschaftliche Weise ermöglichen.

Die verfahrensmäßige Lösung dieser Aufgabe ergibt sich aus den kennzeichnenden Merkmalen des Patentanspruchs 1. Gemäß der Erfindung wird also der Behälter, in welchem sich das zu entwesende Schüttgut befindet, zunächst mit Druckluft vorgespannt, womit sich die Menge an erforderlichem Kohlendioxidgas vermindert. Gemäß einer besonders zweckmäßigen Weiterbildung des Verfahrens wird der Behälter nach der Entwesung des in ihm enthaltenen Schüttguts in einen weiteren Entwesungsbehälter entspannt, wie dies im Patentanspruch 2 gekennzeichnet ist; damit wird die Wirtschaftlichkeit des Verfahrens weiter gesteigert.

Die einrichtungsmäßige Lösung ergibt sich aus den kennzeichnenden Merkmalen des Patentanspruchs 3. Der aufrechtstehende Behälter ist wesentlich leichter zu füllen und zu entleeren, wobei das Einströmrohr mit seinen Einströmöffnungen für eine gleichmäßige Verteilung des Kohlendioxid-Luft-Gemisches sorgt. Besonders vorteilhaft ist es, die Einrichtung gemäß den kennzeichnenden Merkmalen des Patentanspruchs 4 auszugestalten, also mehrere aufrechtstehende Behälter hintereinander zu schalten. Damit wird nicht nur eine ausgezeichnete Nutzung des verwendeten Kohlendioxidgases, sondern darüber hinaus ein nahezu kontinuierlicher Entwesungsbetrieb erreicht, der die schnelle Entwesung großer Schüttgutmengen ermöglicht.

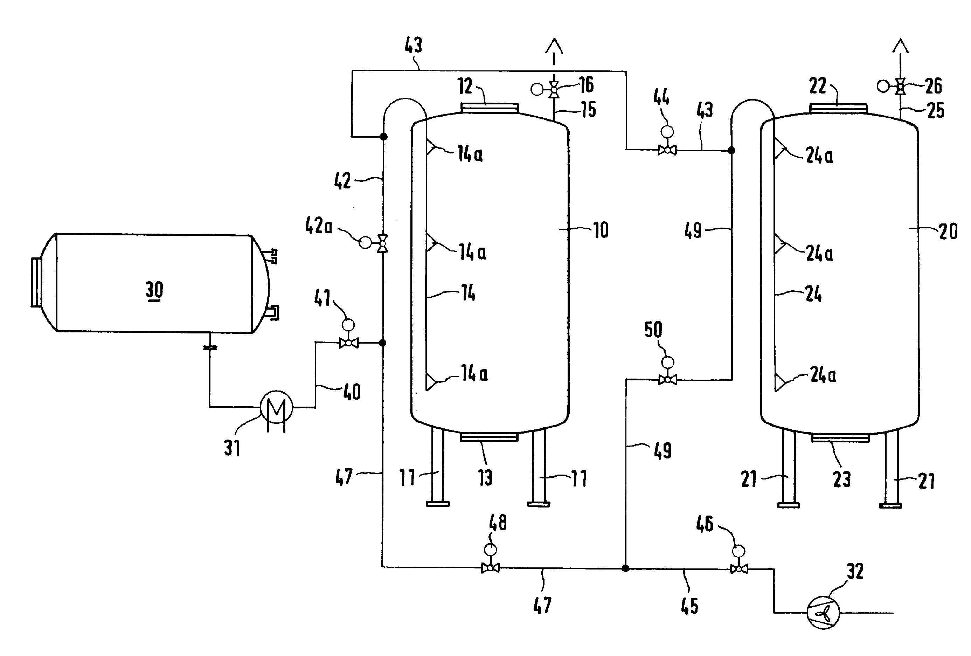

Die Erfindung wird nachfolgend anhand der Zeichnung näher erläutert. Dabei zeigt die einzige Figur die Skizze einer Einrichtung nach der Erfindung.

Mit 10 ist ein erster druckfester Behälter bezeichnet, der die Form eines langgestreckten Zylinders hat und aufrechtstehend auf Standfüßen 11 gelagert ist. Der Behälter 10 weist an seiner oberen Stirnfläche eine druckfest verschließbare Einfüllöffnung 12 und an seiner unteren Stirnfläche eine ebenfalls druckfest verschließbare Auslaßöffnung 13 auf, wobei die beiden Öffnungen 12, 13 mannlochartig gestaltet sind. Im Behälter 10 erstreckt sich in vertikaler Richtung ein im wesentlichen über die gesamte Höhe des Behälters 10 verlaufendes Einströmrohr 14, das über die Behälterhöhe verteilte Einströmdüsen 14a aufweist. Schließlich ist der Behälter 10 an seiner oberen Stirnfläche mit einer ins Freie mündenden Auslaßleitung 15 mit Ventil 16 versehen.

Neben dem Behälter 10 steht ein zweiter, identischer Behälter 11 mit Standfüßen 21, verschließbarer Einlaßöffnung 22, verschließbarer Auslaßöffnung 23, Einströmrohr 24 mit Einströmdüsen 24a und Auslaßleitung 25 mit Ventil 26.

Schließlich weist die Einrichtung eine Kohlendioxidquelle auf, dargestellt als Tank 30 für flüssiges Kohlendioxid mit Verdampfer 31, sowie eine Druckluftquelle 32 auf.

Die Kohlendioxidgasquelle 30, 31 ist über eine Leitung 40 mit Sperrventil 41 und eine daran anschließende Leitung 42 mit Sperrventil 43 mit dem oberen Einlaß des Einströmrohrs 14 des ersten Behälters 10 verbunden. Vor Eintritt in den Behälter 10 zweigt von der Leitung 42 eine Leitung 43 mit Ventil 44 ab, die in den oberen Einlaß des Einströmrohrs 24 des Behälters 20 einmündet. Die Druckluft der Druckluftquelle 32 wird über eine Leitung 45 mit Sperrventil 46 zugeführt. Die Leitung 45 verzweigt in eine Leitung 47 mit Sperrventil 48, die zwischen den Ventilen 41 und 42a in die Leitung 42 einmündet und in eine Leitung 49 mit Sperrventil 50, die in die Leitung 43 einmündet, und zwar zwischen Ventil 44 und Eintritt der Leitung 43 in den Behälter 20.

Die Einrichtung arbeitet folgendermaßen. Bei geschlossenen Ventilen wird zunächst die Einfüllöffnung 12 des ersten Behälters 10 geöffnet und das zu entwesende Schüttgut, etwa Getreide, in den Behälter 10 eingefüllt, beispielsweise über eine Einlaufrinne. Sobald der Behälter 10 gefüllt ist, wird die Öffnung 12 wieder druckfest verschlossen. Nunmehr werden die Ventile 46, 48 und 42a geöffnet, womit Druckluft über die Leitungen 45, 47 und 42 in das Einströmrohr 14 gelangt und aus dessen Düsen 14a in das Innere des Behälters 10 abgegeben wird. Sobald im Inneren des Behälters 10 ein Vorspanndruck von zumindest 4-6 bar, bestimmt vor allem durch die Leistung der Druckluftquelle 32 und die Strömungswiderstände in den Leitungen 45, 47 und 42, erreicht ist, werden die Ventile 46 und 48 wieder geschlossen und das Ventil 41 geöffnet. Damit strömt jetzt über die Leitungen 40 und 43 Kohlendioxidgas aus der Kohlendioxidquelle 30, 31 in das Einströmrohr 14 und gelangt über die Einströmdüsen 14a in über die Behälterhöhe gleichmäßiger Verteilung in das Innere des Behälters 10. Sobald ein Druck zwischen etwa 15 - 25 bar, festgelegt vor allem durch die gewünschte Entwesungszeit und die Schüttgut-Temperatur, erreicht ist, werden die Ventile 41 und 42a geschlossen. In der nunmehr folgenden Entwesungszeit wird das Schüttgut einige wenige Stunden lang, beispielsweise vier Stunden lang, der Einwirkung des unter Druck stehenden Kohlendioxid-Luft-Gemisches ausgesetzt. Während dieser Zeit wird der zweite Behälter 20 in entsprechender Weise mit Schüttgut gefüllt. Nach Ablauf der Entwesungszeit wird der Behälter 10 entspannt und dann die druckfeste Abdeckung der Auslaßöffnung 13 entfernt, womit das entweste Schüttgut aus dem Behälter 10 ausfließt, beispielsweise in unter dem Behälter 10 befindliche Transportbehälter.

Die erwähnte Entspannung des Behälters 10 nach Ablauf der Entwesungszeit kann auf zwei Arten vorgenommen werden. Die eine Möglichkeit besteht darin, das Sperrventil 16 zu öffnen, womit dann die Entspannung über die Auslaßleitung 15 in die Atmosphäre erfolgt. Gemäß der zweiten Möglichkeit wird das Ventil 44 geöffnet, womit eine Teilentspannung über das Einströmrohr 14 und die Leitung 43 in den inzwischen mit Schüttgut gefüllten und wieder verschlossenen Behälter 20 erfolgt. Nach erfolgtem Druckausgleich zwischen den Behältern 10 und 20 wird das Ventil 44 wieder geschlossen, wonach die restliche Entspannung des Behälters 10 durch Öffnen des Ventils 16 über die Leitung 15 in die Atmosphäre erfolgt.

Der Betrieb des zweiten Behälters 20 hängt von der Art der Entspannung des ersten Behälters 10 ab. Ist der erste Behälter 10 vollständig über seine Auslaßleitung 15 in die Atmosphäre entspannt worden, dann werden zunächst die Ventile 46 und 50 geöffnet, womit Druckluft in den Behälter 20 eindringt, worauf, nach Erreichen eines Mindestdrucks von 4 - 6 bar im Inneren des Behälters 20, das Ventil 46 wieder geschlossen und die Ventile 41 und 48 geöffnet werden, so daß jetzt über die Leitungen 40, 48 und 49 Kohlendioxidgas in den Behälter 20 einströmt. Die Ventile werden dann nach Erreichung des gewünschten Entwesungsdrucks wieder geschlossen. Während der Entwesung des Schüttguts im zweiten Behälter 20 wird der erste Behälter 10 wieder mit frischem Schüttgut gefüllt. Ist jedoch der Behälter 10 durch Öffnen des Ventils 44 in den Behälter 20 entspannt (teilentspannt) worden, dann sind nur noch geringere Mengen an zusätzlichem frischem Gas erforderlich, um den erwünschten Entwesungsdruck zu erreichen. Im allgemeinen wird es dabei genügen, nur noch "frisches" Kohlendioxidgas über die Leitungen 40, 47 und 49 in den Behälter 20 einzuleiten; besonders wirtschaftlich ist es jedoch, Druckluft und $CO_2$ in den Behälter 20 einzuleiten, um so ein Anteilsverhältnis Luft/$CO_2$ zu erhalten, das dem ursprünglichen Anteilsverhältnis des Behälters 10 entspricht.

Mit der Erfindung wird somit ein einem kontinuierlichen Betrieb nahekommender Betrieb erreicht. Insbesondere dann, wenn nicht nur zwei sondern eine ganze Behälterbatterie verwendet wird, wobei dann diese Behälter in entsprechender Weise miteinander verbunden sind. Ein derartiger, nahezu kontinuierlicher Betrieb ist äußerst vorteilhaft, beispielsweise dann, wenn Getreide oder dergleichen in Schiffe verladen werden soll, dabei vorher entwest werden muß, allgemein gesprochen, immer dann, wenn große Mengen Schüttgut in möglichst kurzer Zeit entwest werden müssen. Dabei kommt hinzu, daß die erfindungsgemäße Einrichtung eine einfache Beschickung und Entleerung der Entwesungsbehälter ermöglicht, vergleichsweise wenig Stellplatz beansprucht (aufrechtstehende Behälter) und äußerst wirtschaftlich arbeitet, und zwar sowohl aufgrund der Verwendung von Druckluft zum Vorspannen als auch der Entspannung des jeweils vorausgehenden Behälters in den nachfolgenden Behälter.

Selbstverständlich können das Verfahren und die Einrichtung zahlreiche Abwandlungen erfahren, ohne den Bereich der Erfindung zu verlassen. Dies gilt bei dem Verfahren insbesondere für den Vordruck und den Entwesungsdruck, die Reihenfolge der Verfahrensschritte a und b, wobei jedoch dasselbe Anteilsverhältnis Luft/$CO_2$ beibehalten werden soll, sowie die Entwesungszeit, die jeweils von der Art des Schüttguts und von äußeren Umständen abhängig sind, etwa der Außen-bzw. Schüttgut-Temperatur. Zum Zweck der Beschleunigung der Entwesung bei vergleichweise niedrigen Außentemperaturen können die Druckluft und/oder das Kohlendioxidgas vor Einleitung in die Behälter erwärmt werden. Bei der Einrichtung können die Rohrverbindungen sowie die Sperr- und Steuerelemente entsprechend den jeweiligen Umständen modifiziert und angepaßt werden, und zwar bis hin zu einem vollautomatischen Betrieb. Auch die Ausbildung der Ausströmrohre sowie Zahl und Art der Einströmdüsen sind vielfach abwandelbar, wobei jedoch die Bildung eines gleichmäßigen Kohlendioxid-Luft-Gemisches im Behälter inneren gewährleistet sein muß.

## Patentansprüche

1. Verfahren zum Entwesen von organischem Schüttgut, beispielsweise Getreide, in einem druckfesten Behälter (10) mittels Kohlendioxidgas, bei dem unter Druck stehendes Kohlendioxidgas an mehreren über den Behälter (10) verteilten Stellen (14a) in den Behälter (10) eingeleitet, der erreichte Druck über eine Entwesungszeit aufrechterhalten und der Behälter daraufhin entspannt und das entweste Schüttgut abgeleitet wird,
gekennzeichnet durch folgende Verfahrensstufen:
a) in den das Schüttgut enthaltenden Behälter (10) wird zunächst Druckluft eingeleitet, bis im Behälterinneren ein Mindestdruck von 4 bis 6 bar erreicht ist,
b) daraufhin wird zusätzlich unter einem höheren Druck als die im Behälter verhandene Druckluft stehendes Kohlendioxidgas in den Behälter eingeleitet, bis im Behälterinneren ein Druck von 15 bis 25 bar erreicht ist,
c) der erreichte Druck wird über eine Entwesungszeit von zum Beispiel 4 Stunden aufrechterhalten,
d) der Behälter (10) wird entspannt und das entweste Schüttgut abgeleitet.

2. Verfahren nach Anspruch 1,
dadurch gekennzeichnet,
daß der Behälter (10) nach abgelaufener Entwesungszeit in einen zweiten druckfesten, mit zu entwesendem Schüttgut gefüllten Behälter (20) entspannt wird.

3. Einrichtung mit einer Kohlendioxidquelle (30) und einem druckfesten Behälter (10) zur Durchführung des Verfahrens nach Anspruch 1, wobei der Behälter (10) die Form eines aufrechtstehenden, langgestreckten Zylinders hat, im Behälter (10) über die Behälterhöhe versetzt Verteiler-Einströmöffnungen (14a) untergebracht sind und die Verteiler-Einströmöffnungen (14a) über Ventile (42a) enthaltende Leitungen (42) mit der Kohlendioxidquelle (30) verbunden sind,
dadurch gekennzeichnet,
daß der Behälter (10) mit einer druckfest verschließbaren Einfüllöffnung (12) an seiner oberen Stirnfläche und mit einer druckfesten verschließbaren Auslaßöffnung (13) an seiner unteren Stirnfläche versehen ist, daß im Behälter (10) ein Verteiler-Einströmrohr (14) untergebracht ist, das sich im wesentlichen vertikal über die gesamte Behälterhöhe erstreckt und über die Rohrlänge verteilt die Einströmöffnungen (14a) aufweist und daß eine Druckluftquelle (32) vorgesehen ist, wobei das Verteiler-Einströmrohr (14) über Ventile (41, 42a, 46, 48) enthaltende Leitungen (40, 42, 45, 47) mit der Kohlendioxidquelle (30, 31) und der Druckluftquelle (32) verbunden ist.

4. Einrichtung nach Anspruch 3 zur Durchführung des Verfahrens nach Anspruch 2,
gekennzeichnet durch
zumindest einen zweiten aufrechtstehenden druckfesten Behälter (20) mit oberer Einlaß- und unterer Auslaßöffnung (22, 23), der ebenfalls über Ventile (41, 48, 50, 46) enthaltende Leitungen (40, 47, 49) mit der Kohlendioxidquelle (30, 31) und der Druckluftquelle (32) und darüberhinaus über eine weitere ein Ventil (44) enthaltende Leitung (43) mit dem Behälterinneren des ersten Behälters (10) verbindbar ist.

## Claims

1. Process for sterilising organic bulk material, for instance grain, in a pressure-tight container (10) by means of carbon dioxide gas, in which carbon dioxide gas under pressure is introduced into the container (10) at several points (14a) distributed around the container (10), the obtained pressure is maintained throughout a sterilising time and the container is then depressurised and the sterilised bulk material is conducted away,
characterised by the following process steps:
a) compressed air is first of all introduced into the container (10) containing the bulk material until a minimum pressure of 4 to 6 bar is obtained inside the container,
b) in addition carbon dioxide gas at a higher pressure than the compressed air in the container is then introduced into the container until a pressure of 15 to 25 bar is obtained inside the container,
c) the obtained pressure is maintained over a sterilising time of for instance 4 hours,
d) the container (10) is depressurised and the sterilised bulk material is conducted away.

2. Process according to claim 1, characterised in that when the sterilising time is completed the container (10) is depressurised into a second pressure-tight container (20) filled with bulk material to be sterilised.

3. Device having a carbon dioxide source (30) and a pressure-tight container (10) for carrying out the process according to claim 1, wherein the container (10) has the form of an upright elongate cylinder, distributor-inlet apertures (14a) are formed in the container (10) so as to be offset over the height of the container, and the distributor-inlet apertures (14a) are connected to the carbon dioxide source (30) by means of lines (42) containing valves (42a), characterised in that the container (10) is provided with a pressure-tight closable filling aperture (12) on its upper surface and with a pressure-tight closable outlet aperture (13) on its lower surface, in that a distributor-inlet pipe (14) is formed in the container (10) and extends substantially vertically over the entire container height and has the inlet apertures (14a) distributed over the pipe length, and in that a compressed air source (32) is provided, whereby the distributor-inlet pipe (14) is connected to the carbon dioxide source (30, 31) and the compressed air source (32) by means of lines (40, 42, 45, 47) containing valves (41, 42a, 46, 48).

4. Device according to claim 3 for carrying out the process according to claim 2, characterised by at least a second upright pressure-tight container (20) with an upper inlet aperture and lower outlet aperture (22, 23) which can also be connected to the carbon dioxide source (30, 31) and the compressed air source (32) by means of lines (40, 47, 49) containing valves (41, 48, 50, 46), and in addition to the inside of the first container (10) by means of a further line (43) containing a valve (44).

## Revendications

1.- Procédé de désinfestation de matières organiques en vrac, par exemple de grains de céréales, dans un réservoir à l'épreuve de la pression (10) au moyen de gaz anhydride carbonique, procédé dans lequel du gaz anhydride carbonique sous pression est envoyé dans le réservoir (10) en plusieurs points (14a) répartis sur toute l'étendue du réservoir (10), la pression atteinte est maintenue pendant un temps de désinfestation, après quoi le réservoir est détendu et la matière en vrac désinfestée est déversée,
caractérisé par les étapes opérationnelles suivantes:

a) de l'air comprimé est tout d'abord envoyé dans le réservoir (10) contenant la matière en vrac, jusqu'à ce qu'une pression minimale de 4 à 6 bar soit atteinte à l'intérieur du réservoir,
b) puis du gaz anhydride carbonique, sous une pression plus élevée que celle de l'air comprimé présent dans le réservoir, est envoyé en plus, jusqu'à ce qu'une pression de 15 à 25 bar soit atteinte à l'intérieur du réservoir,
c) la pression atteinte est maintenue pendant un temps de désinfestation, par exemple de 4 h,
d) le réservoir (10) est détendu et la matière en vrac désinfestée est déversée.

2.- Procédé selon la revendication 1, caractérisé en ce qu'après l'écoulement du temps de désinfestation, le réservoir (10) est détendu dans un second réservoir (20) à l'épreuve de la pression, rempli de matière en vrac à désinfecter.

3.- Dispositif comportant une source d'anhydride carbonique (30) et un réservoir (10) à l'épreuve de la pression, pour l'exécution du procédé selon la revendication 1, le réservoir (10) ayant la forme d'un cylindre allongé placé debout, des injecteurs-distributeurs (14a) répartis sur la hauteur du réservoir (10) étant disposés dans celui-ci et ces injecteurs-distributeurs (14a) étant reliés à la source d'anhydride carbonique (30) par des conduites (42) comportant des valves (42a), caractérisé en ce que le réservoir (10) est muni, sur sa surface d'extrémité supérieure, d'une ouverture de remplissage (12) obturable de façon étanche à la pression et, sur sa surface d'extrémité inférieure, d'une ouverture de décharge (13) obturable de façon étanche à la pression, en ce qu'il est disposé, dans le réservoir (10), un tube d'admission-distribution (14) qui s'étend en direction pratiquement verticale sur toute la hauteur du réservoir et qui comporte les injecteurs-distributeurs (14a) répartis sur sa longueur, et en ce qu'il est prévu une source d'air comprimé (32), le tube d'admission-distribution (14) étant relié, par des conduites (40, 42, 45, 47) comportant des valves (41, 42a, 46, 48), à la source d'anhydride carbonique (30, 31) et à la source d'air comprimé (32).

4. - Dispositif selon la revendication 3 pour l'exécution du procédé selon la revendication 2, cararterisé par au moins un second réservoir à l'épreuve de la pression (20), placé debout et comportant des ouvertures supérieure de remplissage et inférieure de décharge (22, 23), lequel réservoir peut être également raccordé à la source d'anhydride carbonique (30, 31) et à la source d'air comprimé (32) par des conduites (40, 47, 49) contenant des valves (41, 48, 50, 46), et peut être en outre raccordé au volume intérieur du premier réservoir (10) par une autre conduite (43) comportant une valve (44).

10
11
12
13
14
14a
15
16
20
21
22
23
24
24a
25
26
30
31
32
40
41
42
42a
43
44
45
46
47
48
49
50